# EUROPÄISCHE PATENTSCHRIFT

(11) **EP 3 625 524 B1**
(45) Veröffentlichungstag und Bekanntmachung des Hinweises auf die Patenterteilung: **24.03.2021**
(21) Anmeldenummer: 18725434.7
(22) Anmeldetag: 08.05.2018
(51) Int. Cl.: G01G 17/04, H01F 7/02

(54) **MAGNETTOPF FÜR EINE TAUCHSPULENANORDNUNG EINER ELEKTRONISCHEN WAAGE**
MAGNET POT FOR A PLUNGER SPOOL ARRANGEMENT IN AN ELECTRONIC BALANCE
CULASSE MAGNÉTIQUE POUR UN ENSEMBLE BOBINE MOBILE D'UNE BALANCE ÉLECTRONIQUE

(30) Priorität: 19.05.2017 DE 102017110930
(43) Veröffentlichungstag der Anmeldung: 25.03.2020
(73) Patentinhaber: Sartorius Lab Instruments GmbH & Co. KG, 37079 Göttingen (DE)
(72) Erfinder: BORNEMANN, Lars, 37124 Rosdorf (DE); MÜLLER, Michael, 37079 Göttingen (DE); SCHRADER, Christian, 37194 Bodenfelde (DE); HELMSEN, Friedrich, 37073 Göttingen (DE); BODE, Jonas, 37075 Göttingen (DE); MÜCK, Tanja, 38685 Langelsheim (DE)
(74) Vertreter: Vigand, Philippe
(86) Internationale Anmeldenummer: PCT/EP2018/061794
(87) Internationale Veröffentlichungsnummer: WO 2018/210613

(56) Entgegenhaltungen:
- EP-A2- 1 770 380
- JP-A- 2006 138 665
- JP-B2- 3 691 607

## Beschreibung

### Gebiet der Erfindung

Die Erfindung bezieht sich auf einen Magnettopf für eine Tauchspulenanordnung einer nach dem Prinzip der elektromagnetischen Kompensation arbeitenden, elektronischen Waage, umfassend
- einen Topfboden und eine von dem Topfboden senkrecht aufragende Topfwand, sowie
- eine innerhalb der Topfwand mit einem Ringspalt zu dieser angeordnete Permanentmagnetstruktur, die einen topfbodenseitig angeordneten Permanentmagnetkörper und eine mit dessen topfbodenabgewandter Fläche verbundene Polplatte aufweist.

### Stand der Technik

Eine Tauchspulenanordnung mit einem derartigen Magnettopf ist bekannt aus der DE 10 2010 013 764 B4. Die Druckschrift erwähnt zwar nicht explizit eine Verwendung der in ihr offenbarten Tauchspulenanordnung für eine nach dem Prinzip der elektromagnetischen Kompensation arbeitende, elektronische Waage; gleichwohl entspricht die offenbarte Tauchspulenanordnung dem üblicherweise bei elektronischen Waagen eingesetzten Typus.

Nach dem Prinzip der elektromagnetischen Kompensation arbeitende, elektronische Waagen, sogenannte EMK-Waagen, sind dem Fachmann seit Langem bekannt. Ihr Wirkprinzip beruht darauf, dass eine Auslenkung eines durch ein zu wägendes Gewicht belasteten Hebelsystems dadurch verhindert wird, dass die Spule einer mit dem Hebelsystem verbundenen Tauchspulenanordnung kompensatorisch bestromt wird, sodass die Gewichtskraft und die elektromagnetische Kraft, die beide an dem Hebelsystem ansetzten, einander aufheben. Der hierfür erforderliche Spulenstrom, der auch als Messstrom bezeichnet wird, dient als Maß für die erforderliche Kompensationskraft und daher für die zu wägende Gewichtskraft.

Die Tauchspulenanordnung besteht aus der Tauchspule, die üblicherweise an dem Hebelsystem angelenkt ist, und dem Magnettopf, der üblicherweise an einer festen Basis, der gegenüber das Hebelsystem beweglich gelagert ist, fixiert ist. Der Magnettopf umfasst den eigentlichen Topf und eine darin angeordnete Permanentmagnetstruktur, wobei der Topf als magnetisches Joch für die Permanentmagnetstruktur dient. Die Permanentmagnetstruktur ist typischerweise aus einem Permanentmagnetkörper aus permanentmagnetischen Material und einer sogenannten Polplatte aufgebaut. Die Polplatte dient der Vergleichmäßigung des magnetischen Feldes und ist typischerweise aus einem nicht-permanentmagnetischen, ferromagnetischen Material ausgebildet. Die oben genannte Druckschrift offenbart den typischen Aufbau eines derartigen Magnettopfes, wobei der Permanentmagnetkörper unmittelbar auf dem Topfboden und die Polplatte auf der topfbodenabgewandten Fläche des Permanentmagnetkörpers angeordnet ist.

Die Verbindung zwischen Topfboden und Permanentmagnetkörper einerseits und Permanentkörper und Polplatte andererseits, zu deren Details die genannte Druckschrift keine Aussage macht, erfolgt typischerweise durch zwei Verklebungen an den genannten Schnittstellen. Dies kann bei Präzisionswaagen problematisch sein. Bereits geringste Positionsveränderungen der Polplatte relativ zu der sie umgreifenden Tauchspule führen zu einer Veränderung der elektromagnetischen Wechselwirkung und daher zu einer Veränderung der auf das Hebelsystem wirkenden Kompensationskraft. Eine Positionsänderung der Polplatte beeinflusst also das Messergebnis. Die Erfahrung lehrt, dass alle am Markt erhältlichen Klebstoffe, die für die Verklebung zwischen Permanentmagnetkörper und Topfboden einerseits und Permanentmagnetkörper und Polplatte andererseits in Frage kommen, dazu tendieren, Feuchtigkeit aus der Luft aufzunehmen und entsprechend zu quellen. Die Breite der Klebespalte hängt daher in starkem Maße von der Umgebungs-Luftfeuchtigkeit ab. Beim bekannten Aufbau eines Magnettopfes addieren sich die Breitenänderungen der beiden Klebespalte zu einer Positionsveränderung der Polplatte relativ zum Topfboden auf. Dies führt, wie oben erläutert, zu einer feuchtigkeitsabhängenden Beeinflussung des Messergebnisses. Dies ist bei Präzisionsmessungen inakzeptabel.

Aus der JP H09-89 637 A ist ein vergleichbarer Magnettopf bekannt, bei dem die Polplatte und der Permanentmagnetkörper ausdrücklich ohne Verwendung von Klebstoff rein mechanisch am Topfboden fixiert sind. Dies erfolgt mittels einer zentralen Durchgangsbohrung durch die Polplatte und den Permanentmagnetkörper, durch die hindurch ein aus nicht-magnetischem Material bestehender Bolzen in eine zentrale Gewindebohrung im Topfboden geschraubt wird. Sowohl das Bohren des häufig sehr spröden Magnetmaterials als auch seine fixierende Pressung beim Festschrauben birgt eine erhebliche Beschädigungsgefahr.

Aus der JP 2006-189 330 A ist eine Tauchspulenanordnung bekannt, bei der die Position der Tauchspule relativ zur Permanentmagnetstruktur justierbar ist, ohne dass dadurch die Position des Hebelsystems beeinflusst würde. Diese Anordnung ist zwar theoretisch zur Lösung des vorgenannten Problems geeignet, hat sich in der Praxis jedoch nicht bewährt, da zum einen die winzigen Positionsänderungen der Polplatte durch die manuelle Justage nicht hinreichend genau korrigierbar sind. Zudem ist es praxisuntauglich, vor jeder Wägung eine solch filigrane Justage durchzuführen, was jedoch wegen des erläuterten Einflusses der sich ständig ändernden Umgebungsluftfeuchte für die Gewährleistung gleichbleibender Messqualität erforderlich wäre. Zudem haben die Erfinder eine weitere mit dem Quellen der Klebespalte verbundene Fehlerquelle erkannt. So hängt auch bei unveränderter Relativpositionierung von Polplatte und Tauchspule die Stärke des die Tauchspule durchsetzenden Magnetfeldes von der Summe der Spaltbreiten zwischen Permanentmagnetkörper und Topfboden einerseits und Permanentmagnetkörper und Polplatte andererseits ab. Dieser Einfluss auf die wirksame Magnetfeldstärke lässt sich durch die vorgenannte Justagemöglichkeit nicht eliminieren. Weitere Tauchspulenanordnungen sind aus JP3691607B, EP1770380 A2, oder JP2006138665 A bekannt.

### Aufgabenstellung

Es ist die Aufgabe der vorliegenden Erfindung, einen gattungsgemäßen Magnettopf derart weiterzubilden, dass die Reproduzierbarkeit von Wägeergebnissen von EMK-Waagen deren Tauchspulenanordnung einen derartigen Magnettopf einhält, insbesondere gegen Einflüsse durch Luftfeuchtigkeitsänderungen verbessert wird.

### Darlegung der Erfindung

Diese Aufgabe wird in Verbindung mit den Merkmalen des Oberbegriffs von Anspruch 1 dadurch gelöst, dass die Polplatte durch eine von dem Permanentmagnetkörper unabhängige, starre, mechanische Verbindung mit dem Topfboden in einem vorgegebenen Abstand von diesem fixiert ist und der Permanentmagnetkörper ohne Kontakt zum Topfboden mit der topfbodenseitigen Fläche der Polplatte verklebt ist.

Bevorzugte Ausführungsformen der Erfindung sind Gegenstand der abhängigen Patentansprüche.

Abweichend vom Stand der Technik erfolgt die Positionierung der Polplatte nicht unmittelbar über den Permanentmagnetkörper, sondern unabhängig von diesem über eine eigene, starre Verbindung mit dem Topfboden, für die weiter unten konkrete Ausführungsbeispiele angegebenen werden sollen. Die Polplatte ist also in ihrem Abstand zum Topfboden absolut fixiert. Insbesondere ist die erfindungsgemäße, starre mechanische Verbindung von Luftfeuchteänderungen unabhängig. Im Kontext einer Tauchspulenanordnung kann die Tauchspule also in dauerhaft konstanter Relativpositionierung zur Polplatte angeordnet werden, ohne dass es dazu einer besonderen Justagevorrichtung bedürfte. Hierdurch wird die oben genannte, erste Fehlerquelle, nämlich die mangelnde Positionskonstanz der Polplatte, behoben.

Zudem eliminiert die Erfindung auch die oben genannte, zweite Fehlerquelle, nämlich die fehlende Konstanz der Spaltbreitensumme oberhalb und unterhalb des Permanentmagnetkörpers. Erfindungsgemäß ist der Permanentmagnetkörper mit der topfbodenseitigen Fläche der Polplatte verklebt. Ein Kontakt zum Topfboden selbst besteht jedoch gerade nicht (oben genannte Unabhängigkeit der Polplatten/Topfboden-Verbindung). Vielmehr verbleibt zwischen der topfbodenseitigen Fläche des Permanentmagnetkörpers und dem Topfboden ein Spalt der typischerweise leer bzw. mit Umgebungsluft gefüllt ist. Oberhalb und unterhalb des Permanentmagnetkörpers sind also nach wie vor Spalte ausgebildet, von denen jedoch derjenige zwischen Permanentmagnetkörper und Polplatte als Klebespalt und derjenige zwischen Permanentmagnetkörper und Topfboden als Luftspalt ausgeführt ist. Ein Quellen des Klebespaltes führt zu einer entsprechenden Verringerung des Luftspaltes, sodass die Summe der Spaltbreiten, deren Variation die Erfinder als zweite Fehlerquelle erkannt haben, konstant bleibt. Auf diese Weise eliminiert die Erfindung daher auch die zweite genannte Fehlerquelle.

Die Verwendung des erfindungsgemäßen Magnettopfes in einer Tauchspulenanordnung einer EMK-Waage führt also zu einer deutlich verbesserten Unabhängigkeit der Messergebnisse von der Umgebungs-Luftfeuchte.

Bei einer bevorzugten Ausführungsform der Erfindung ist vorgesehen, dass die mechanische Verbindung zwischen der Polplatte und dem Topfboden einen den Permanentkörper berührungslos durchsetzenden Bolzen umfasst, dessen erstes Ende mit dem Topfboden und dessen zweites Ende mit der Polplatte verbunden ist. Dieser starre Verbindungsbolzen definiert also in luftfeuchteunabhängiger Weise den Abstand zwischen der Polplatte und dem Topfboden und damit die Position der Polplatte relativ zum Topfboden.

Der Bolzen kann auf unterschiedliche Weise gestaltet sein. Bei einer ersten Ausführungsform ist vorgesehen, dass der Bolzen als ein an seinen beiden Enden je ein Außengewinde tragender Gewindebolzen ausgebildet ist, dessen erstes Ende in ein entsprechendes Innengewinde des Topfbodens eingeschraubt ist und dessen zweites Ende in ein entsprechendes Innengewinde der Polplatte eingeschraubt ist. Um den Abstand zwischen der Polplatte und dem Topfboden exakt zu definieren, weist der Gewindebolzen bevorzugt zwischen seinen Außengewinden einen radial verdickten Bereich auf, der beiderseits von je einem axial wirksamen Anschlagflansch begrenzt ist. Der Gewindebolzen kann also bis zu seinem topfbodenseitigen Anschlagflansch in das Innengewinde des Topfbodens eingeschraubt werden. Sodann kann, insbesondere bei zentrischer Anordnung des Gewindebolzens, die Polplatte mit ihrem Innengewinde bis zum polplattenseitigen Anschlagflansch aufgeschraubt werden. Mit geeigneter Anzugskraft kann eine dauerhaft stabile Verbindung geschaffen werden. Selbstverständlich können zusätzliche, dem Fachmann bekannte Maßnahmen zur Verschraubungsfixierung Einsatz finden.

Bei einer alternativen Ausführungsform ist vorgesehen, dass der Bolzen als eine den Topfboden durchsetzende und mit einem an ihrem ersten Ende angeordneten Schraubenkopf gegen dessen Außenfläche abgestützte Schraube ausgebildet ist, deren gewindetragendes, zweites Ende in ein entsprechendes Innengewinde der Polplatte eingeschraubt ist. Die Einschraubtiefe in das Innengewinde der Polplatte, die die Position der Polplatte relativ zum Topfboden bestimmt, kann auf unterschiedliche Weise exakt vorgegeben werden. Bei einer bevorzugten Ausgestaltung ist vorgesehen, dass die Schraube eine hohlzylindrische, den Permanentmagnetkörper berührungslos durchsetzende und sich mit ihrem ersten Ende gegen den Topfboden und mit ihrem zweiten Ende gegen die Polplatte abstützende Distanzhülse durchsetzt. Die Stirnflächen der Distanzhülse bieten jeweils eine Anlagefläche für den Topfboden bzw. die Polplatte, sodass die axiale Länge der Distanzhülse deren Abstand definiert. Durch die Verschraubung wird die Polplatte gegen die Distanzhülse und dadurch mittelbar gegen den Topfboden gezogen. Bei dieser Ausführungsform umgreift die Distanzhülse die Schraube unmittelbar und wird ihrerseits von dem Permanentmagnetkörper, den sie durchsetzt, umgriffen. Um weiter voneinander entfernet Abstützpunkte und dadurch eine verbesserte Stabilität zu generieren, kann auch vorgesehen sein, dass die Distanzhülse den von der Schraube durchsetzten Permanentmagnetkörper radial außen umgreift. Die Distanzhülse hat dann einen entsprechend größeren Durchmesser und bildet folglich eine stabilere Abstützung zwischen Topfboden und Polplatte.

Bei einer anderen Ausgestaltung ist eine Mehrzahl von exzentrisch angeordneten, den Permanentmagnetkörper berührungslos durchsetzenden und sich mit ihren ersten Enden gegen den Topfboden und mit ihrem zweiten Enden gegen die Polplatte abstützenden Distanzstiften vorgesehen. Bevorzugt sind die Distanzstifte mit der Polplatte oder mit dem Topfboden durch Verschweißung, Verlötung, Verschraubung oder Verstiftung verbunden. Die Wirkungsweise ist im Wesentlichen die gleiche wie bei der zuvor erläuterten Ausgestaltung mit Distanzhülse. Der Vorteil liegt jedoch - jedenfalls im Vergleich zu einer Distanzhülse kleinen Durchmessers - in der breiteren Auflagefläche und damit in einer größeren Verkippsicherheit der Polplatte gegenüber dem Topfboden. Andererseits vermeidet die Distanzhülsen-Variante jegliche nicht-rotationssymmetrischen Strukturen, was der Homogenität des Magnetfeldes zugute kommt. In beiden Fällen führt ein Anziehen der Schraube mit geeigneter Anzugskraft zu einer dauerhaften Fixierung wobei selbstverständlich dem Fachmann bekannte Verschraubungssicherungsmaßnahmen zusätzlich Einsatz finden können.

Der Fachmann wird verstehen, dass die vorgenannten Varianten mit Distanzhülsen und/oder Distanzstiften nicht auf Ausführungsformen des Bolzens als Schraube beschränkt sind. Auch Ausführungsformen als beiderends mit Gewinden versehene Gewindebolzen sind ohne weiteres mit diesen Arten der Distanzfixierung kombinierbar.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine Tauchspulenanordnung mit einer ersten Ausführungsform eines erfindungsgemäßen Magnettopfes,
- Figur 2:: eine Tauchspulenanordnung mit einer zweiten Ausführungsform eines erfindungsgemäßen Magnettopfes,
- Figur 3:: eine Tauchspulenanordnung mit einer dritten Ausführungsform eines erfindungsgemäßen Magnettopfes und
- Figur 4:: eine Tauchspulenanordnung mit einer vierten Ausführungsform eines erfindungsgemäßen Magnettopfes

### Ausführliche Beschreibung bevorzugter Ausführungsformen

Gleiche Bezugszeichen in den Figuren deuten auf gleiche oder analoge Elemente hin.

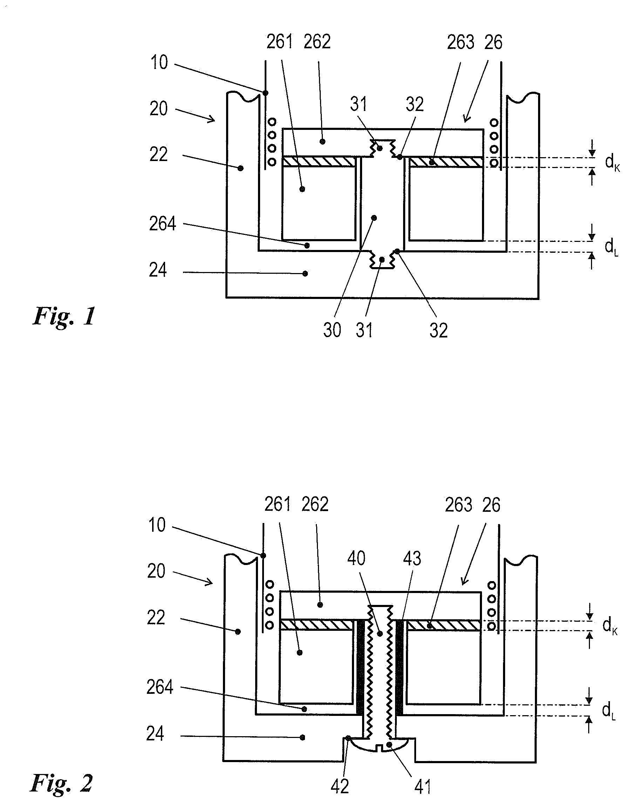

Die Figuren 1 bis 3 zeigen jeweils eine Tauchspulenanordnung, wie sie insbesondere für das Sensorsystem einer nach dem Prinzip der elektronmagnetischen Kompensation arbeitenden Präzisionswaage geeignet ist.

Die Tauchspulenanordnung umfasst dabei jeweils eine Tauchspule 10 und einen Magnettopf 20. In Montageendlage ist die Tauchspule 10 an einem nicht dargestellten Hebelarm eines Wägesystems befestigt und taucht in das Magnetfeld des Magnettopfes 20 ein, wie in den Figuren grob schematisch skizziert.

Der Magnettopf 20 umfasst eine hohlzylindrische Topfwand 22, die von einem Topfboden 24 aufragt. Konzentrisch innerhalb der Topfwand 22 ist eine Permanentmagnetstruktur 26 ausgebildet, die im Wesentlichen aus einem Permanentmagnetkörper 261 und einer Polplatte 262 besteht. Der Permanentmagnetkörper 261 hat eine im Wesentlichen zylindrische Form. Die Polplatte 262 ist im Wesentlichen kreisscheibenförmig ausgebildet. Der Permanentmagnetkörper 261 und die Polplatte 262 sind über eine Klebeschicht 263 miteinander verklebt. Die Klebeschicht 263 befindet sich dabei zwischen der unteren, d.h. topfbodenzugewandten Fläche der Polplatte 262 und der oberen, d.h. der topfbodenabgewandten Fläche des Permanentmagnetkörpers 261. Über weiter unten näher beschriebene Befestigungsmittel ist die Polplatte 262 in einem vorgegebenen Abstand vom Topfboden 24 fixiert. Dieser Abstand ist so gewählt, dass zwischen der unteren Fläche des Permanentmagnetkörpers 261 und dem Topfboden ein geringer Luftspalt 264 verbleibt.

In Abhängigkeit von der Luftfeuchte der Umgebungsluft kann die Klebeschicht 263 aufquellen bzw. schrumpfen, wodurch sich ihre Schichtdicke d_{K} entsprechend verändert. Dies führt aufgrund der Abstandsfixierung der Polplatte 262 zu einer jeweils gleich großen, jedoch umgekehrt orientierten Veränderung der Spaltdicke d_{L} des Luftspaltes 264. Die Summe aus Klebeschichtdicke d_{K} und Luftspaltdicke d_{L} bleibt also unabhängig von der aktuellen Luftfeuchte stets konstant. Ebenso bleibt wegen der Abstandsfixierung der Polplatte 262 deren Position ebenfalls stets konstant. Dadurch sind die beiden wichtigsten Fehlerquellen für die Stärke des Magnetfeldes am Ort der Tauchspule 10 eliminiert.

In den Figuren 1 bis 4 sind drei unterschiedliche Ausführungsformen der Abstandsfixierung der Polplatte 262 dargestellt, die jeweils einzeln oder in Kombination miteinander einsetzbar sind.

Bei der Ausführungsform von Figur 1 ist ein Gewindebolzen 30 vorgesehen, der in seinen beiden Enden 31 jeweils ein Außengewinde trägt. Zwischen seinen Enden 31 ist der Bolzen 30 im Wesentlichen zylindrisch geformt, wobei sein Durchmesser hier den Durchmesser seiner Enden 31 überragt, sodass sich an den beiden Übergängen zwischen dem verdickten Zentralbereich und den Enden 31 je ein schulterartiger, axial wirksamer Anlageflansch 32 bildet. Mit seinem unteren Ende 31 ist der Bolzen 30 bis zum zugeordneten Anlageflansch in ein korrespondierendes Innengewinde im Zentrum des Topfbodens eingeschraubt. Der Permanentmagnetkörper 261 weist eine zentrale Ausnehmung auf, sodass die gesamte Permanentmagnetstruktur 26 über den Bolzen 30 gestülpt und ein zentrales Innengewinde der Polplatte 262 auf das obere Ende 31 des Bolzens 30 aufgeschraubt werden kann und zwar bis zum korrespondierenden Anlageflansch 32. Die zentrale Ausnehmung im Permanentmagnetkörper 261 ist so groß gewählt, dass der verdickte Bereich des Bolzens 30 nicht kontaktiert wird.

Bei der Ausführungsform von Figur 2 ist zur Fixierung der Polplatte 262 eine Schraube 40 vorgesehen, die den Topfboden 24 von unten durchsetzt und mit ihrem Schraubenkopf 41 an einem vorzugsweise versenkt angeordneten Anschlagsitz 42 anliegt. Der Schraubenschaft durchragt die zentrale Ausnehmung des Permanentmagnetkörpers 261 und gestattet ein Aufschrauben der Permanentmagnetstruktur 26, wie auch oben im Zusammenhang mit Figur 1 beschrieben. Die Höhenfixierung der Polplatte 262 erfolgt jedoch mittels einer Distanzhülse 43, die zwischen dem Schraubenschaft und der Wandung der Ausnehmung im Permanentmagnetkörper 261 angeordnet ist. Ihre Länge definiert den Abstand zwischen der Polplatte 262 und dem Topfboden 24. Beim Festziehen der Schraube 40 wird also die Polplatte 262 gegen die Distanzhülse 43 und diese gegen den Topfboden 24 gezogen. Ein mechanischer Kontakt zwischen der Distanzhülse 43 und dem Permanentmagnetkörper 261 ist dabei vorzugsweise zu vermeiden.

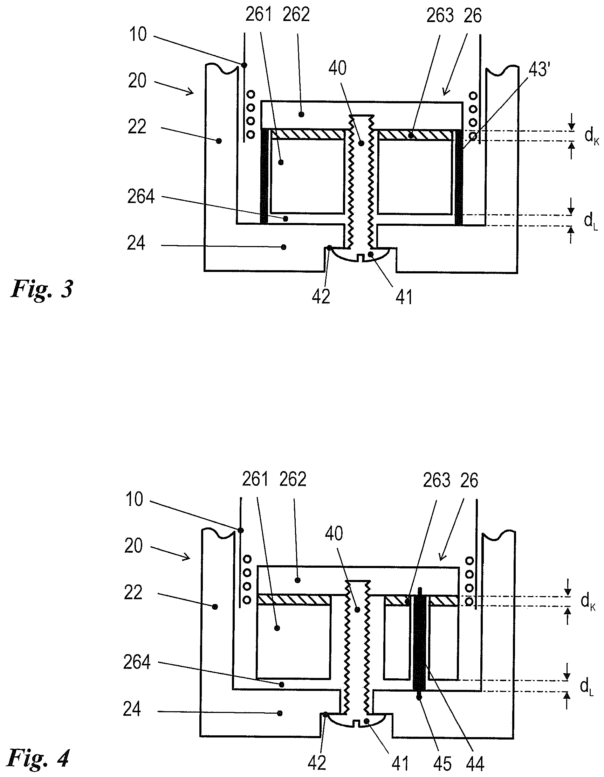

Figur 3 zeigt eine ähnliche Ausführungsform, bei der jedoch die Distanzhülse 43' einen größeren Durchmesser aufweist und den Permanentmagnetkörper 261 radial außen berührungslos umgreift. Die Polplatte 262 ragt bei dieser Ausführungsform radial außen über den Permanentmagnetkörper 261 hinaus und bietet so einen Anlageflansch, der sich auf dem Rand der Distanzhülse 43' abstützt.

Bei der Ausführungsform von Figur 4 sind anstelle einer einzelnen Distanzhülse 43, 43' mehrere, exzentrisch angeordnete Distanzstifte 44 vorgesehen, von den in Figur 3 lediglich einer dargestellt ist. Bei der dargestellten Ausführungsform weist der Distanzstift 44 an seinen Enden jeweils einen Vorsprung verringerten Durchmessers auf, mit dem er in einer entsprechenden Ausnehmung des Topfbodens 24 bzw. der Polplatte 262 vorpositionierbar ist. Selbstverständlich weist der Permanentmagnetkörper 261 Durchgangsöffnungen auf, welche im zusammengesetzten Zustand von den Distanzstiften 44, vorzugsweise berührungslos, durchsetzt werden.

### Bezugszeichenliste

- 10: Tauchspule
- 20: Magnettopf
- 22: Topfwand
- 24: Topfboden
- 26: Permanentmagnetstruktur
- 261: Permanentmagnetkörper
- 262: Polplatte
- 263: Klebeschicht
- 264: Luftspalt
- 30: Gewindebolzen
- 31: Ende von 30
- 32: Anlageflansch
- 40: Schraube
- 41: Schraubenkopf
- 42: Anschlagsitz
- 43, 43': Distanzhülse
- 44: Distanzstift
- 45: Ende von 44
- d_{K}: Klebeschichtdicke
- d_{L}: Luftspaltdicke

## Patentansprüche

1. Magnettopf (20) für eine Tauchspulenanordnung (10) einer nach dem Prinzip der elektromagnetischen Kompensation arbeitenden, elektronischen Waage, umfassend
- einen Topfboden (24) und eine von dem Topfboden (24) senkrecht aufragende Topfwand (22), sowie
- eine innerhalb der Topfwand (22) mit einem Ringspalt zu dieser angeordnete Permanentmagnetstruktur (26), die einen topfbodenseitig angeordneten Permanentmagnetkörper (261) und eine mit dessen topfbodenabgewandter Fläche verbundene Polplatte (262) aufweist, **dadurch gekennzeichnet, dass** die Polplatte (262) durch eine von dem Permanentmagnetkörper (261) unabhängige, starre, mechanische Verbindung mit dem Topfboden (24) in einem vorgegebenen Abstand von diesem fixiert ist und der Permanentmagnetkörper (261) ohne Kontakt zum Topfboden (24) mit der topfbodenseitigen Fläche der Polplatte (262) verklebt ist.

2. Magnettopf (20) nach Anspruch 1,
**dadurch gekennzeichnet,**
**dass** die mechanische Verbindung zwischen der Polplatte (262) und dem Topfboden (24) einen den Permanentmagnetkörper (261) berührungslos durchsetzenden Bolzen umfasst, dessen erstes Ende mit dem Topfboden (24) und dessen zweites Ende mit der Polplatte (262) verbunden ist.

3. Magnettopf (20) nach Anspruch 2,
**dadurch gekennzeichnet,**
**dass** der Bolzen als ein an seinen beiden Enden je ein Außengewinde tragender Gewindebolzen (30) ausgebildet ist, dessen erstes Ende (31) in ein entsprechendes Innengewinde des Topfbodens (24) eingeschraubt ist und dessen zweites Ende in ein entsprechendes Innengewinde der Polplatte (262) eingeschraubt ist.

4. Magnettopf (20) nach Anspruch 3,
**dadurch gekennzeichnet,**
**dass** der Gewindebolzen (30) zwischen seinen Außengewinden einen radial verdickten Bereich aufweist, der beiderseits von je einem axial wirksamen Anlageflansch (32) begrenzt ist.

5. Magnettopf (20) nach Anspruch 2,
**dadurch gekennzeichnet,**
**dass** der Bolzen als eine den Topfboden (24) durchsetzende und mit einem an ihrem ersten Ende angeordneten Schraubenkopf (41) gegen dessen Außenfläche abgestützte Schraube (40) ausgebildet ist, deren gewindetragendes, zweites Ende in ein entsprechendes Innengewinde der Polplatte (262) eingeschraubt ist.

6. Magnettopf (20) nach einem der Ansprüche 2 bis 5,
**dadurch gekennzeichnet,**
**dass** der Bolzen eine hohlzylindrische, den Permanentmagnetkörper (261) berührungslos durchsetzende und sich mit ihrem ersten Ende gegen den Topfboden (24) und mit ihrem zweiten Ende gegen die Polplatte (262) abstützende Distanzhülse (43) durchsetzt.

7. Magnettopf (20) nach einem der Ansprüche 2 bis 5,
**dadurch gekennzeichnet,**
**dass** der Bolzen eine hohlzylindrische, den Permanentmagnetkörper (261) berührungslos umgreifende und sich mit ihrem ersten Ende gegen den Topfboden (24) und mit ihrem zweiten Ende gegen die Polplatte (262) abstützende Distanzhülse (43') durchsetzt.

8. Magnettopf (20) nach einem der Ansprüche 2 bis 7,
**gekennzeichnet durch**
eine Mehrzahl von exzentrisch angeordneten, den Permanentmagnetkörper (261) berührungslos durchsetzenden und sich mit ihren ersten Enden gegen den Topfboden (24) und mit ihren zweiten Enden gegen die Polplatte (262) abstützenden Distanzstiften (44).

## Claims

1. A pot magnet (20) for a moving coil arrangement (10) of an electronic balance operating on an electromagnetic compensation principle, said pot magnet comprising:
- a pot base (24) and a pot wall (22) rising perpendicularly from the pot base (24), and
- a permanent magnet structure (26), disposed within and defining an annular gap to the pot wall (22), wherein the permanent magnet structure comprises a permanent magnet body (261) arranged on a side of the structure that faces the pot base, and a pole plate (262) connected to a surface of the permanent magnet body that faces away from the pot base,
**characterized in that**
the pole plate (262) is fixed by a rigid mechanical connection, independent of the permanent magnet body (261), to the pot base (24) at a predetermined distance from the pot base, and wherein the permanent magnet body (261) is glued to the pole plate on a surface of the pole plate (262) that faces the pot base without contact to the pot base (24).

2. The pot magnet (20) according to claim 1, **characterized in**
**that** the mechanical connection between the pole plate (262) and the pot base (24) comprises a bolt passing through the permanent magnet body (261) without contact to the permanent magnet body and having a first end connected to the pot base (24) and having a second end connected to the pole plate (262).

3. The pot magnet (20) according to claim 2, **characterized in**
**that** the bolt is formed as a threaded bolt (30) having an external thread on each of two ends of the bolt, wherein the first end (31) is screwed into an internal thread of the pot base (24) corresponding to the external thread on the first end of the bolt, and wherein the second end is screwed into an internal thread of the pole plate (262) corresponding to the external thread on the second end of the bolt.

4. The pot magnet (20) according to claim 3, **characterized in**
**that** the threaded bolt (30) has a radially thickened region extending between the external threads on the first and the second ends of the threaded bolt, and wherein the thickened region is bounded on each end thereof by a respective axially effective abutment flange (32).

5. The pot magnet (20) according to claim 2, **characterized in**
**that** the bolt is configured as a screw (40) that passes through the pot base (24), wherein the screw is supported by a screw head (41), disposed on the first end of the screw, against an axially outer surface of the screw head, and wherein the screw has a threaded second end screwed into an internal thread of the pole plate (262) corresponding to the threaded second end.

6. The pot magnet (20) according to any of claims 2 to 5,
**characterized in**
**that** the bolt comprises a hollow cylindrical spacer sleeve (43) that passes through the permanent magnet body (261) without contact to the permanent magnet body and is supported by the first end of the bolt against the pot base (24) and by the second end of the bolt against the pole plate (262) .

7. The pot magnet (20) according to any of claims 2 to 5,
**characterized in**
**that** the bolt passes through a hollow cylindrical spacer sleeve (43') which axially surrounds the permanent magnet body (261) without contact to the permanent magnet body and is supported by the first end of the bolt against the pot base (24) and by the second end of the bolt against the pole plate (262) .

8. The pot magnet (20) according to any of claims 2 to 7,
**characterized by**
a plurality of eccentrically arranged spacer pins (44) that pass through the permanent magnet body (261) without contact to the permanent magnet body and are supported by first ends thereof against the pot base (24) and by second ends thereof against the pole plate (262).

## Revendications

1. Culasse magnétique (20) pour un ensemble de bobine mobile (10) d'une balance électronique fonctionnant selon le principe de la compensation électromagnétique, comprenant
- un fond de culasse (24) et une paroi de culasse (22) faisant saillie verticalement du fond de culasse (24), ainsi que
- une structure d'aimant permanent (26), disposée à l'intérieur de la paroi de culasse (22) avec une fente annulaire par rapport à celle-ci, qui présente un corps d'aimant permanent (261) disposé côté fond de culasse et une plaque polaire (262) reliée à la surface, opposée au fond de culasse, de celui-ci,
**caractérisée en ce que**
la plaque polaire (262) est fixée au fond de culasse (24) à une distance prédéfinie de celui-ci par une liaison mécanique, rigide, indépendante du corps d'aimant permanent (261) et le corps d'aimant permanent (261) est collé à la surface côté fond de culasse de la plaque polaire (262) sans contact par rapport au fond de culasse (24).

2. Culasse magnétique (20) selon la revendication 1, **caractérisée en ce**
**que** la liaison mécanique entre la plaque polaire (262) et le fond de culasse (24) comprend un boulon, traversant sans contact le corps d'aimant permanent (261), dont la première extrémité est reliée au fond de culasse (24) et dont la deuxième extrémité est reliée à la plaque polaire (262).

3. Culasse magnétique (20) selon la revendication 2, **caractérisée en ce**
**que** le boulon est réalisé sous la forme d'un boulon fileté (30), portant respectivement un filet extérieur à ses deux extrémités, dont la première extrémité (31) est vissée dans un filet intérieur correspondant du fond de culasse (24) et dont la deuxième extrémité est vissée dans un filet intérieur correspondant de la plaque polaire (262).

4. Culasse magnétique (20) selon la revendication 3, **caractérisée en ce**
**que** le boulon fileté (30) présente entre ses filets extérieurs une zone radialement épaissie, qui est délimitée de part et d'autre par respectivement une bride d'appui (32) agissant axialement.

5. Culasse magnétique (20) selon la revendication 2, **caractérisée en ce**
**que** le boulon est réalisé sous la forme d'une vis (40), traversant le fond de culasse (24) et en appui avec une tête de vis (41) disposée sur sa première extrémité contre la surface extérieure de celle-ci, dont la deuxième extrémité, portant le filet, est vissée dans un filet intérieur correspondant de la plaque polaire (262).

6. Culasse magnétique (20) selon l'une quelconque des revendications 2 à 5,
**caractérisée en ce**
**que** le boulon traverse une douille d'écartement (43) cylindrique creuse, traversant sans contact le corps d'aimant permanent (261) et s'appuyant avec sa première extrémité contre le fond de culasse (24) et avec sa deuxième extrémité contre la plaque polaire (262).

7. Culasse magnétique (20) selon l'une quelconque des revendications 2 à 5,
**caractérisée en ce**
**que** le boulon traverse une douille d'écartement (43') cylindrique creuse, entourant sans contact le corps d'aimant permanent (261) et s'appuyant avec sa première extrémité contre le fond de culasse (24) et avec sa deuxième extrémité contre la plaque polaire (262).

8. Culasse magnétique (20) selon l'une quelconque des revendications 2 à 7,
**caractérisée par**
une pluralité de tiges d'écartement (44) disposées de manière excentrique, traversant sans contact le corps d'aimant permanent (261) et s'appuyant avec sa première extrémité contre le fond de culasse (24) et avec sa deuxième extrémité contre la plaque polaire (262).
